# EUROPEAN PATENT APPLICATION

(11) **EP 1 894 636 A2**
(43) Date of publication of application: **05.03.2008**
(21) Application number: 07112096.8
(22) Date of filing: 09.07.2007
(51) Int. Cl.: B05C 11/10

(54) **Glue dispensing apparatus**

(30) Priority: 28.08.2006 IT MO20060262
(71) Applicant: SCM GROUP S.p.A., 47900 Rimini RN (IT)
(72) Inventor: Coltro, Davide, 36010, Monticello Conte Otto (VI) (IT); Greselin, Stefano, 36050, Bolzano Vicentino (VI) (IT); Pegoraro, Raffaele, 36030, Villaverla (VI) (IT)
(74) Representative: Crugnola, Pietro

(57) **Abstract**

A glue dispensing apparatus for dispensing a desired quantity of glue onto an element to be glued (2) comprises a pre-melting unit (3) for melting said glue and tank means (4) for receiving said glue from said pre-melting unit (3); said pre-melting unit (3) is fixed to said tank means (4).

## Description

The invention relates to a glue dispensing apparatus arranged for dispensing a desired quantity of glue onto an element to be glued.

In particular, the invention relates to a glue dispensing apparatus that is associable with a working machine for machining wood or similar materials, such as for example an edgebanding machine or a squaring edgebanding machine.

These working machines perform edgebanding operations on panels, tables, flat wooden elements or similar material, and comprise glue dispensing apparatuses or gluing units that spread a layer of glue onto tapes, strips, lists or the like to be applied to edges of panels, or directly onto the edges of such panels.

The glue used is in generally a glue in granular form that is thermally meltable, that has to be suitably heated before being applied "hot" onto the surfaces to be glued.

Glue dispensing apparatuses are known comprising a pre-melting unit and a supplying tank.

The pre-melting unit comprises hopper means arranged for receiving and containing the glue in granular form.

The pre-melting unit further comprises a melting chamber coated in non-stick material, communicating with the hopper means and provided with a plurality of electric resistances arranged for melting the glue granules.

The melting chamber is provided with a dispensing nozzle in a bottom portion thereof, the dispensing nozzle facing and being arranged for dispensing a desired quantity of melted glue to the supplying tank.

The supplying tank, which is operationally positioned below, and at a certain distance from, the pre-melting unit, is also coated in non-stick material and comprises a funnel inlet portion and a supplying chamber.

The funnel inlet portion faces the dispensing nozzle and communicates with the supplying chamber, which is provided with respective electric resistances that are able to heat the glue evenly, and thus maintain the glue flowable.

The supplying chamber is further provided near an end portion thereof, which is opposite the aforesaid inlet portion, with an opening through which the glue flows to supply a rotating gluing roller, extending parallel to the supplying chamber and having a knurled or rough external surface, suitable for retaining and conveying the glue.

The gluing roller partially occludes the aforesaid opening and, by rotating, transfers and spreads the glue onto the surfaces of the elements to be glued.

The dispensing apparatus is further provided with one or more doctor blades, interposed between the aforesaid opening and the gluing roller, arranged for adjusting the quantity of glue to be spread on the knurled surface of the gluing roller.

A drawback of the dispensing apparatuses disclosed above are the excessive overall dimensions of the pre-melting unit and the supplying tank on the working machine with which the pre-melting unit and the supplying tank are associated.

A further drawback is that such apparatuses are not much thermally very efficient.

That is due on the one hand to the remarkable number of electric resistances necessary for melting and maintaining flowable the glue.

In fact, both the pre-melting unit and the supplying tank have to be provided with respective electric resistances with consequent increase both of the costs associated therewith and the structural complexity of the apparatus.

On the other hand, when the glue is transferred from the pre-melting unit to the supplying tank, the glue cools and a remarkable waste of energy is consequently necessary by the electric resistances of the supplying tank for heating and maintaining flowable the glue.

A further drawback is the possibility that the glue may be contaminated by possible dirt present near the dispensing apparatus, that could reduce the adhesive capability of the glue, and consequently compromise the proper mutual adhesion of the elements to be glued.

In fact, the glue dispensed by the dispensing nozzle may accidentally come into contact with powder, machining remnants, or similar, while is being transferred from the pre-melting unit to the supplying tank.

An object of the invention is to improve the glue dispensing apparatuses arranged for dispensing a desired quantity of glue onto elements to be glued, in particular glue dispensing apparatuses that are associable with a working machine for machining wood or similar materials.

A further object is to make dispensing apparatuses more compact and thermally efficient than the known apparatuses.

Another object is to provide dispensing apparatuses that enable the possibility for the glue of being contaminated to be reduced, or eventually eliminated.

According to the invention, a glue dispensing apparatus is provided for dispensing a desired quantity of glue onto an element to be glued comprising a pre-melting unit for melting said glue and tank means for receiving said glue from said pre-melting unit, characterized in that said pre-melting unit is fixed to said tank means.

Owing to the invention, a particularly compact glue dispensing apparatus can be made, as the pre-melting unit is integral with the tank means.

This further enables the thermal efficiency of the dispensing apparatus to be improved.

In fact, the electric resistances of the pre-melting unit can be used even for melting the glue and for heating at least a portion of the tank means, so as to maintain the glue flowable within the tank means.

This enables the number of electric resistances of the tank means, and consequently of the dispensing apparatus, to be reduced, with consequent economic saving.

Furthermore, owing to the invention, the glue flows directly from the pre-melting unit to the tank means.

This enables both undesired cooling of the glue to be reduced and consequently the thermal efficiency of the apparatus to be improved and contamination of the glue with possible dirt present near the dispensing apparatus to be eliminated.

The invention can be better understood and implemented with reference to the attached drawings in which some embodiments of the invention are shown by way of non-limiting embodiment examples, in which:
Figure 1 is a perspective view of a glue dispensing apparatus;
Figure 2 is a top view of the apparatus in Figure 1;
Figure 3 is a schematic section taken along the plane III-III of the apparatus in Figure 1 in a first operating configuration;
Figure 4 is a schematic section like the one in Figure 3 of the apparatus in Figure 1 in a second operating configuration;
Figure 5 is a schematic section like the one in Figure 3 of the apparatus in Figure 1 in a third operating configuration;

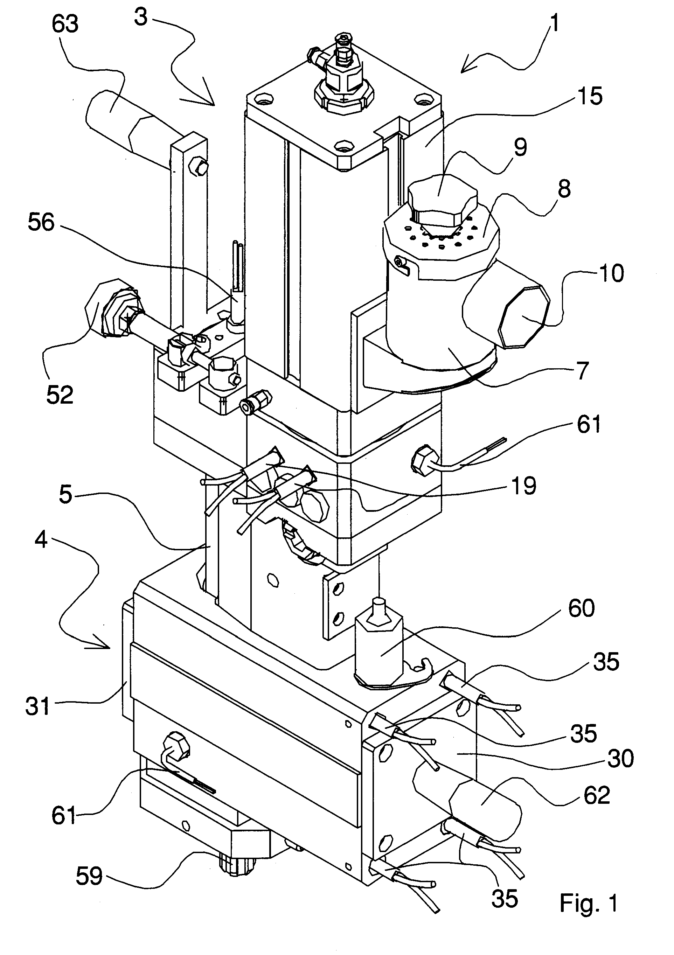

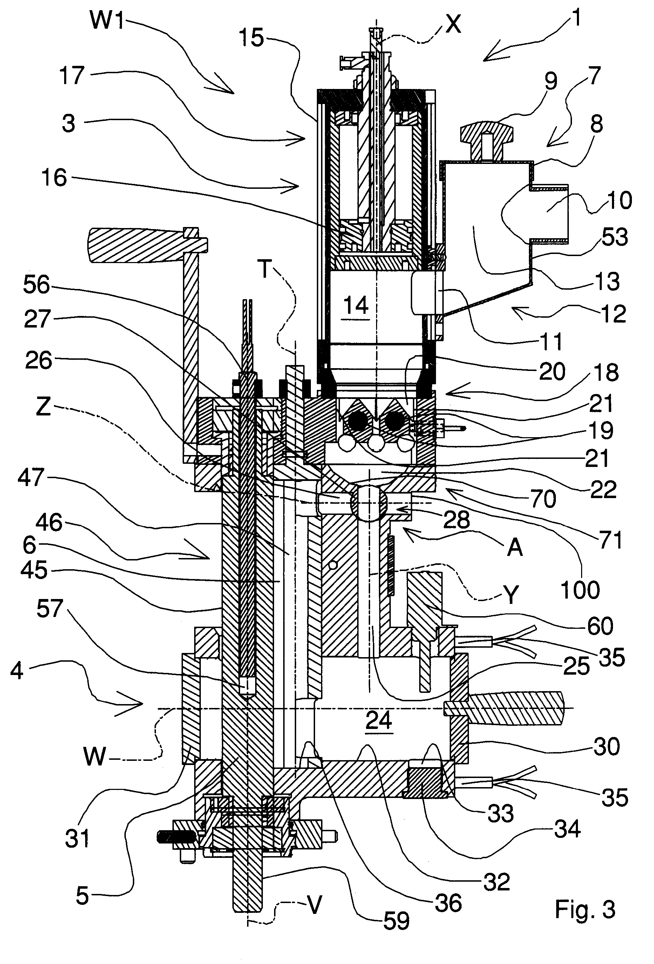

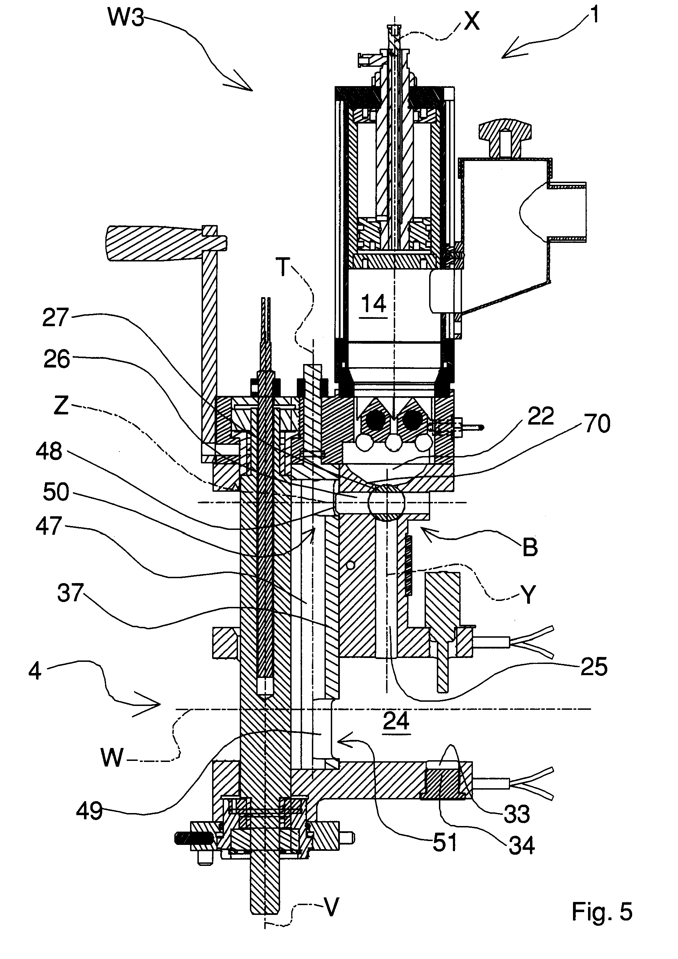

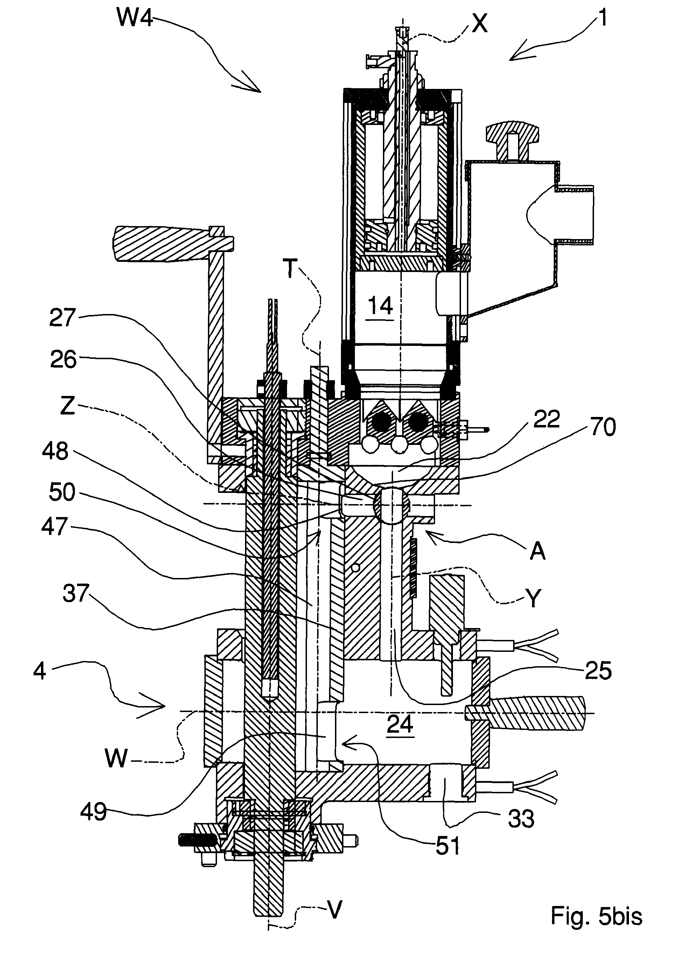

Figure 5bis is a schematic section like the one in Figure 3 of the apparatus in Figure 1 in a fourth operating configuration;

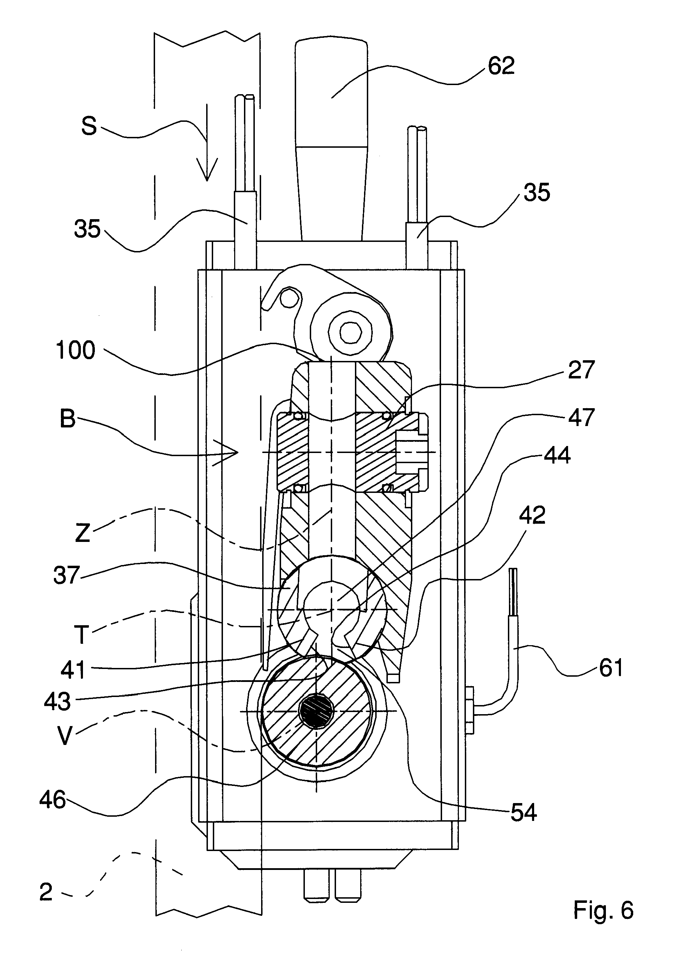

Figure 6 is a schematic section taken along the plane VI-VI of the apparatus in Figure 1;

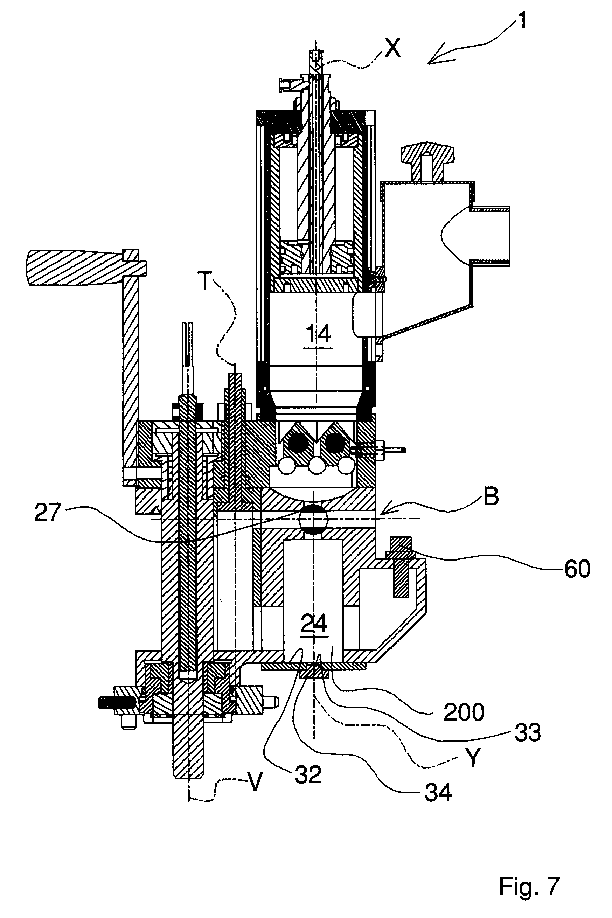

Figure 7 is a schematic longitudinal section of a second embodiment of the glue dispensing apparatus in Figure 1;

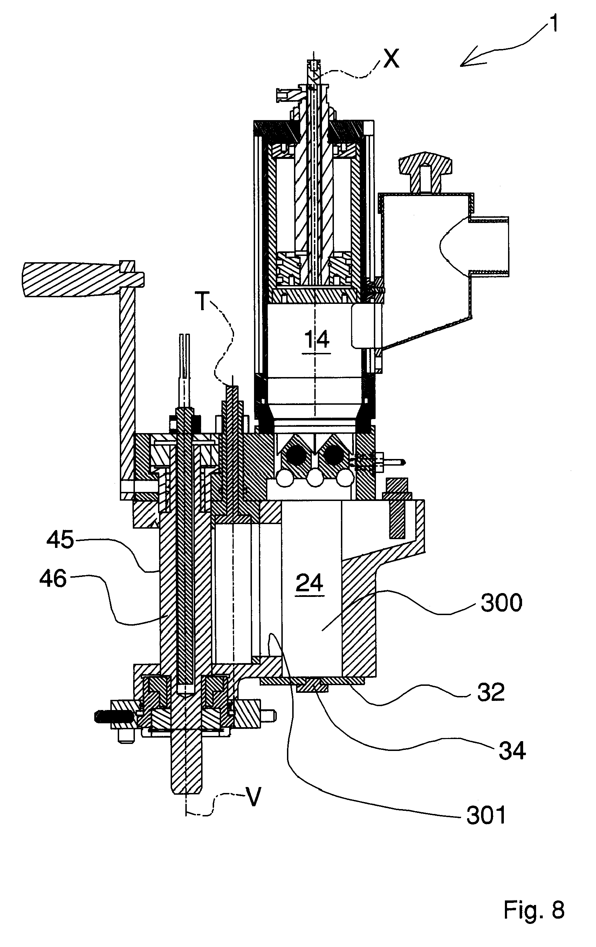

Figure 8 is a schematic longitudinal section of a third embodiment of the glue dispensing apparatus in Figure 1;

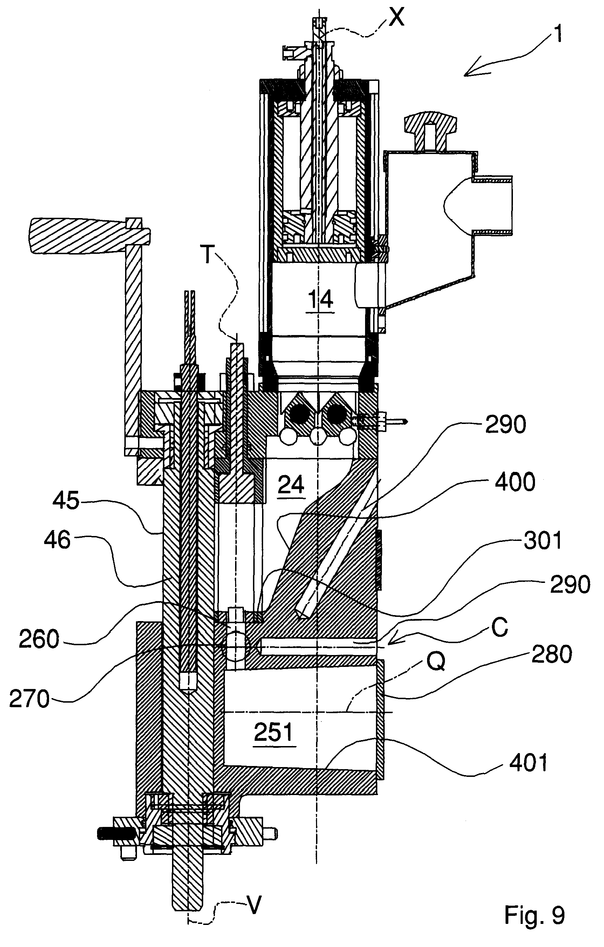

Figure 9 is a schematic longitudinal section of a fourth embodiment of the glue dispensing apparatus in Figure 1.

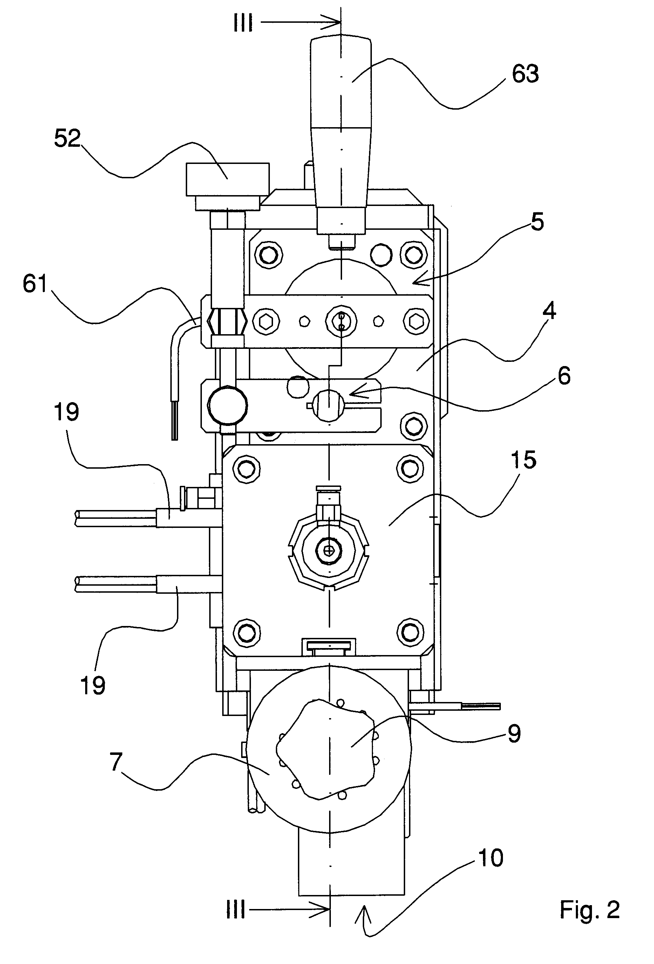

With reference to Figures 1 to 6, a glue dispensing apparatus 1 is shown arranged for dispensing a desired quantity of glue onto an element 2 to be glued.

The apparatus 1 is arranged for being associated with a working machine for machining wood or similar materials, which is not shown, such as, for example, an edgebanding machine or a squaring edgebanding machine.

In these working machines, the apparatus 1 spreads a layer of glue onto belts, strips, lists or the like to be applied to edges of panels, or directly onto the edges of such panels.

The glue used is generally a glue in granular form, which is thermally meltable, which has to be suitably heated before being applied "hot" to the elements 2 to be glued.

The apparatus 1 comprises a pre-melting unit 3, tank means 4, roller means 5 and doctor blade means 6.

The pre-melting unit 3 is arranged for melting the glue and making the glue flowable, and comprises, as shown in Figure 3, containing means 7 having substantially funnel shape and defining a containing chamber 13 arranged for receiving and containing the glue, or a cleanser, in granular form.

The containing means 7 comprises a cover 8 arranged for being removed by means of a handle 9 for manually loading the glue or the cleanser in granules into the containing chamber 13.

The containing means 7 further comprises a side surface 53 in which a loading opening 10 is made that is connectable to a pneumatic loading device arranged for automatically loading the glue or the cleanser in granules into the containing chamber 13.

This pneumatic loading device, which is not shown, conveys the glue or the cleanser in granules in an air vein by means of the so-called "Venturi effect".

In the side surface 53, substantially at a bottom portion 12 of the containing means 7, a discharging opening 11 is further made.

The discharging opening 11 is positioned opposite the loading opening 10 and is arranged for enabling the glue or the cleanser in granules to pass from the containing chamber 13 to a melting chamber 14 of the pre-melting unit 3 in which the glue or the cleanser in granules are melted.

The melting chamber 14, coated in non-stick material, is bounded by a box element 15 substantially having the shape of a parallelepipedon extending along a first axis X.

The melting chamber 14 comprises a first end portion 17 provided with a piston 16, for example drivable by pneumatic driving means, which is not shown.

The piston 16, which is slidable in the melting chamber 14 along the first axis X, is arranged for pressing the glue or the cleanser, during a melting step of the glue or the cleanser, as will be better disclosed below.

The melting chamber 14 further comprises a second end portion 18, opposite the first end portion 17, provided with first heating means 19, for example comprising a plurality of electric resistances.

The melting chamber 14 further comprises casting channel means 20 operationally positioned above the first heating means 19 and defining a plurality of interstices 21 arranged for preventing the passage of glue or cleanser in the granular form, and for enabling the passage of glue or cleanser in a flowable state from the melting chamber 14 to a collecting chamber 22.

The collecting chamber 22, which is provided with a concave bottom surface 70 and arranged for receiving the glue or the cleanser that have been melted by pre-melting unit 3, is made in an end 71 of the tank means 4 on which the box element 15 of the pre-melting unit 3 is fixed.

In this way, the pre-melting unit 3 is integral with the tank means 4.

The tank means 4 comprises a supplying chamber 24 arranged for supplying the roller means 2 with the glue.

In an embodiment of the invention, which is not shown, connecting means is provided, which comprises pipe means, arranged for connecting the pre-melting unit 3 with the tank means 4.

In other words, in this embodiment the aforesaid connecting means is separated from, and mounted on, the tank means 4.

The tank means 4 comprises a feeding conduit 25 coated in non-stick material, extending along a second axis Y substantially parallel to the first axis X, and arranged for making the melted glue or the melted cleanser flow from the collecting chamber 22 to the supplying chamber 24.

The tank means 4 further comprises a washing conduit 26, intersecting in an intersecting zone 28 the feeding conduit 25.

The washing conduit 26 extends along a third axis Z, that is transverse with respect to the first axis X, and is arranged for making possibly glue in the supplying chamber 24 exit therefrom, as will be better disclosed below.

The tank means 4 further comprises shutter means 27 provided with a longitudinal passage 29.

The shutter means 27 is substantially positioned at the intersecting zone 28 and is rotatable, for example by pneumatic driving means, between a first working position A and a second working position B.

In the first working position A, shown in Figure 3, the shutter means 27 enables the glue to flow along the feeding conduit 25 from the collecting chamber 22 to the supplying chamber 24.

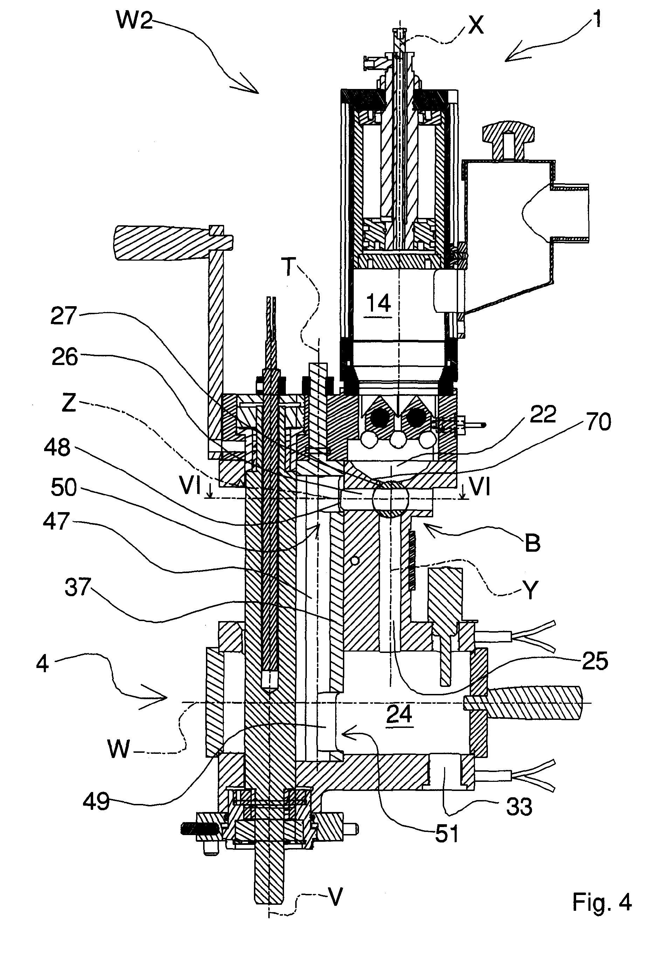

On the other hand, in the second working position B, shown in Figure 4, the shutter means 27 enables the glue in the supplying chamber 24 to flow from the latter to an outlet 100 of the washing conduit 26 and from the outlet 100 to the external environment, as will be better disclosed in below.

In an embodiment of the invention, which is not shown, the feeding conduit 25 and the washing conduit 26 are separated and respectively comprise first shutter means and second shutter means.

In this embodiment, the first shutter means comprises a first longitudinal passage and is movable between a first and a second operating position respectively to enable the glue to flow/prevent the glue from flowing from the collecting chamber 22 to the supplying chamber 24 whilst the second shutter means is provided with a second longitudinal passage and is also movable between a further first operating position and a further second operating position respectively to enable the glue to flow/prevent the glue from flowing from the supplying chamber 24 to the washing conduit 26.

The supplying chamber 24, coated in non-stick material, is operationally positioned below the collecting chamber 22.

In this way, the melted glue or the melted cleanser can flow by gravity from the collecting chamber 22 to the supplying chamber 24.

The supplying chamber 24 has a substantially parallelepipedon shape and extends along a fourth axis W substantially parallel to the third axis Z.

The supplying chamber 24 further comprises a bottom wall 32 extending substantially parallel to the fourth axis W and provided with a washing opening 33, for example threaded, closed by a closing plug 34. The supplying chamber 24 comprises a first side wall 30 and a second side wall 31, extending substantially perpendicularly with respect to the fourth axis W and facing each other.

The first side wall 30 and the second side wall 31 are removable, in such a way as to enable easy access to the interior of the supplying chamber 24 to enable the latter to be washed, as will be better disclosed below.

The supplying chamber 24 further comprises second heating means 35 for heating the glue evenly and thus maintaining the glue flowable, for example comprising a plurality of electric resistances.

The supplying chamber 24 is further provided with a housing 36, extending substantially parallel to the second axis Y, arranged for receiving the doctor blade means 6.

The doctor blade means 6 is rotatable around, and extends along, a respective rotation axis T extending substantially parallel to the first axis X, so as to make a plurality of operating positions.

The doctor blade means 6 is arranged for adjusting a quantity of glue to be transferred to an external surface 45 of a roller 46 of the roller means 5, glue that is subsequently applied by the aforesaid external surface 45 to the element 2 to be glued advancing along an advance direction S.

The doctor blade means 6 comprises an elongate tubular element 37, having a substantially internally hollow cylindrical shape, extending along the rotation axis T.

The tubular element 37 comprises a groove 54 extending along the rotation axis T and defining two facing and opposed portions that act respectively as first doctor blade 41 and second doctor blade 42 (Figure 6).

The first doctor blade 41 and the second doctor blade 42 comprise respective abutment corners 43, 44, arranged for abutting on the external surface 45 of the roller 46.

Inside the tubular element 37 a gap 47 is further arranged for containing the glue and making the glue flow from the supplying chamber 24 to the roller means 5 during a gluing step, or for making the glue flow from the supplying chamber 24 to the washing conduit 26 during a washing step, as will be better disclosed below.

The gap 47 communicates respectively with the washing conduit 26 and the supplying chamber 24 through a first opening 48 and a second opening 49 made respectively in a first end 50 and in a second end 51 of the tubular element 37 (Figure 4) .

The first opening 48 and the second opening 49 extend substantially parallel to the third axis Z and face respectively the washing conduit 26 and the supplying chamber 24.

The doctor blade means 6 further comprises adjusting means 52 arranged for adjusting a corresponding position of the first doctor blade 41 and the second doctor blade 42 with respect to the roller 46.

In an embodiment of the invention, which is not shown, the doctor blade means 4 comprises a pair of doctor blades.

The roller 46, of known type, is arranged for rotating around a respective second rotation axis V, substantially parallel to the first rotation axis T, and by means of the knurled or rough external surface 45 for applying a layer of glue onto the element 2 to be glued.

The roller 46 is rotated by actuating means, not shown, both clockwise and anticlockwise in function of the type of elements 2 to be glued.

For example, the roller 46 rotates clockwise to glue strips or belts in the so-called "soft-forming" machining, whereas the roller 46 rotates anticlockwise to glue edges of panels or tables to be edgebanding in the so-called "straight" machining.

The roller 46 further comprises a seat 57 extending along the second rotation axis V, arranged for receiving third heating means 56.

The third heating means 56, for example comprising an electric resistance, is arranged for maintaining the external surface 45 of the roller 46 at a certain temperature to promote the "hot" application of the glue.

The roller 46 further comprises a shank 59, for example toothed, arranged for coupling with a suitable drive means, which is not shown.

In this way, the shank 59 acts as a rapid hooking/unhooking device for hooking/unhooking the dispensing apparatus 1 on the working machine.

The dispensing apparatus 1 further comprises level sensors 60 inserted into and projecting inside the supplying chamber 24, arranged for detecting the level of glue inside the latter and temperature control sensors 61 (Figure 1) arranged for detecting the temperature inside the melting chamber 14 and the supplying chamber 24.

The dispensing apparatus 1 further comprises first handle means 62 and second handle means 63 associated with and positioned on opposite parts with respect to the supplying chamber 24, said first handle means 62 and said second handle means 63 being arranged for facilitating the lifting thereof.

With particular reference to Figures 3, 4 and 5, the operation of the glue dispensing apparatus 1 is disclosed below.

In Figure 3 the dispensing apparatus 1 is shown in a first operating configuration W1, in which the dispensing apparatus 1 is arranged for dispensing a desired quantity of glue onto the element 2 to be glued.

In the first operating configuration W1, the melting chamber 14 is at least partially filled with the glue in granules coming from the containing chamber 13.

Inside the melting chamber 14 the glue is heated to a melting temperature by the first heating means 19 and is simultaneously pressed by the piston 16.

In this way, the glue, in melted state, passes through the interstices 21 from the melting chamber 14 to the collecting chamber 22.

In the collecting chamber 22 the glue is conveyed from the bottom concave surface 70 to the feeding conduit 25.

As in the first operating configuration W1 the shutter means 27 is positioned in the first working position A, the melted glue flows along the feeding conduit 25 from the collecting chamber 22 to the supplying chamber 24.

Once the supplying chamber 24 and the gap 47 have been completely filled with melted glue, and after the doctor blade means 6 has been positioned in a desired operating position, the roller 46 is rotated, which by means of the external surface 45 dispenses a layer of glue onto the element 2 to be glued.

In Figure 4 the dispensing apparatus 1 is shown in a second operating configuration W2, in which it is possible to remove the glue from the supplying chamber 24.

In the second operating configuration W2 the shutter means 27 is positioned in the second working position B.

In order to remove the glue from the supplying chamber 24 it is sufficient to remove the closing plug 34 from the washing opening 33 and rotate the roller 46.

In this way, a prevalent quantity of glue exits from the closing plug 34, whilst a residual quantity of glue in the supplying chamber 24 flows from the latter to the outlet 100 of the washing conduit 26 along the gap 47 through the effect of the rotation of the roller 46 and of the particular conformation of the suitably knurled or rough external surface 45, suitable for retaining and conveying the glue.

In Figure 5 the dispensing apparatus 1 is shown in a third operating configuration W3, in which it is possible to perform thorough cleaning of the supplying chamber 24 can be carried out.

In the third operating configuration W3, the shutter means 27 is positioned in the second working position B and the first wall 30 and the second wall 31 have been removed from the supplying chamber 24.

In order to perform thorough cleaning of the supplying chamber 24, i.e. in order to remove the solidified glue residues inside the supplying chamber, it is sufficient to unscrew the closing plug 34 to evacuate the residual glue in the supplying chamber 24, remove the first side wall 31 and the second side wall 31 and insert into the supplying chamber 24 suitable cleaning means, which is not shown, for example comprising cleaning brush means.

In Figure 5bis the dispensing apparatus 1 is shown in a fourth operating configuration W4, in which it is possible to perform the washing of the supplying chamber 24 by means of the cleanser in granules.

In the fourth operating configuration W4 the shutter means 27 is positioned in the first working position A and the closing plug 34 has been removed from the washing opening 33.

The supplying chamber 24 is washed after the glue in the supplying chamber 24 and in the gap 47 has been suitably removed in the manner disclosed above.

The cleanser in granules is introduced into the melting chamber 14 through the containing chamber 13 to perform washing of the supplying chamber 34.

Inside the melting chamber 14 the cleanser is heated to a melting temperature by the first heating means 19 and is simultaneously pressed by the piston 16.

In this way, the cleanser, in melted state, passes through the interstices 21 from the melting chamber 14 to the collecting chamber 22.

In the collecting chamber 22 the cleanser is conveyed from the concave bottom surface 70 to the feeding conduit 25.

As in the fourth operating configuration W4 the shutter means 27 is positioned in the first working position A, the melted cleanser flows along the feeding conduit 25 from the collecting chamber 22 to the supplying chamber 24 and from the latter exits through the washing opening 33.

With reference to Figure 7 a second embodiment of the glue dispensing apparatus 1 is shown.

In this embodiment, operatively substantially similar to the embodiment disclosed in the Figures 1 to 6, the supplying chamber 24 comprises an intermediate portion 200 which has a substantially parallelepipedon shape and extends along the second axis Y.

In this embodiment, furthermore, the bottom wall 32, substantially positioned at the intermediate portion 200, is removable, so as to enable an easy access to the interior of the supplying chamber 24 to enable the supplying chamber 24 to be washed, as previously disclosed.

In particular, in a washing step, the plug 34 is at first removed for causing a prevalent quantity of glue to flow out and subsequently the bottom wall 32 is removed for causing a remaining quantity of glue to flow out.

With reference to Figure 8 a third embodiment of the glue dispensing apparatus 1 is shown.

In this embodiment, the glue or the cleanser flow directly from the melting chamber 14 into the supplying chamber 24.

In this embodiment, furthermore, the supplying chamber 24 comprises a main portion 300 having substantially shape of a parallelepipedon and extending substantially parallel to the first axis X.

The main portion 300 comprises a feeding opening 301 for feeding the glue to the roller 46, the feeding opening 301 having almost equal height with respect to a portion of the external surface 45 arranged for receiving the glue.

In this embodiment, furthermore, the bottom wall 32, positioned substantially at the main portion 300, is removable, so as to allow an easy access to the interior of the supplying chamber 24 to enable the supplying chamber 24 to be cleaned, as disclosed previously.

In particular, in a washing step the plug 34 is first of all removed to cause a prevalent quantity of glue to flow out and subsequently the bottom wall 32 is removed to cause a remaining quantity of glue to flow out.

With reference to Figure 9 a fourth embodiment of the glue dispensing apparatus 1 is shown.

In this embodiment, the melted glue or the melted cleanser flow directly from the melting chamber 14 into the supplying chamber 24.

In this embodiment, the supplying chamber 24, having substantially shape of upside-down truncated cone, comprises a wall 400, inclined with respect to the first axis X, arranged for directing the glue to the roller 46.

Also in this embodiment, the feeding opening 301 for feeding the glue to the roller 46 has an almost equal height with respect to the portion of the external surface 45 arranged for receiving the glue.

In this embodiment, the tank means 4 comprises a connecting conduit 260 arranged for connecting the supplying chamber 24 with a discharging chamber 251 arranged for causing the glue to flow out of the supplying chamber 24.

The discharging chamber 251, positioned below the supplying chamber 24, extends along a fifth axis Q substantially perpendicular with respect to the first axis X and has substantially shape of a truncated cone.

In other words, the discharging chamber 251 is defined by walls 401 diverging in the advancing direction of the glue.

The discharging chamber 251 further comprises a further wall 280 removably associated with the unloading chamber 251, so as to allow an easy access to the interior of the discharging chamber 251 to enable the discharging chamber 251 to be washed.

In this embodiment, further shutter means 270 is further provided, associated with the connecting conduit 260, and movable between a further first working position C, and a further second working position, not shown, in which the further shutter means 270 respectively enables/prevents the glue, or the cleanser, from flowing along the connecting conduit 260 from the supplying chamber 24 to the discharging chamber 251.

At last, in this embodiment, further seats 290 are provided, positioned between the supplying chamber 24 and the discharging chamber 251, arranged for receiving the second heating means 35, not represented.

It is to be noticed that, owing to the invention, a particularly compact glue dispensing apparatus 1 can be obtained.

In fact, the pre-melting unit 3 is mounted directly on the tank means 4; in other words the pre-melting unit 3 is integral with the tank means 4.

This further enables the thermal efficiency of the dispensing apparatus 1 to be improved.

In fact, the first heating means 19 of the pre-melting unit 3 can be used both for melting the glue in the melting chamber 14 and for heating at least a portion of the tank means 4, so that the glue is maintained flowable at the interior of the tank means 4.

This enables the number of electric resistances of the tank means 4, and consequently of the dispensing apparatus 1, to be reduced with consequent economic savings.

It is still to be noticed that, as in the apparatus 1 disclosed above, the glue flows from the pre-melting unit 3 to the tank means 4 inside the latter.

This enables, on the one hand, undesired cooling of the glue to be limited and consequently the thermal efficiency of the apparatus 1 to be improved, and, on the other hand, contamination of the glue with possible dirt present near the dispensing apparatus 1 to be eliminated.

It is further to be noticed, as owing to the washing opening 33, the first side wall 30, the second side wall 31 and/or the removable bottom wall 32 and/or the discharging chamber 251 provided with the further wall 280, the tank means 4 can be washed quickly and efficiently, so as to enable a fast and efficient substitution of the type and/or the colour of the glue.

## Claims

1. Glue dispensing apparatus for dispensing a desired quantity of glue onto an element (2) to be glued, comprising a pre-melting unit (3) for melting said glue and tank means (4) for receiving said glue from said pre-melting unit (3), **characterized in that** said pre-melting unit (3) is fixed to said tank means (4).

2. Apparatus according to claim 1, wherein said tank means (4) comprises a supplying chamber (24) arranged for supplying glue dispensing means (5) with said glue.

3. Apparatus according to claim 2, wherein said supplying chamber (24) comprises a wall (400) inclined with respect to a substantially vertical axis (X).

4. Apparatus according to any preceding claim, wherein said tank means comprises a collecting chamber (12) arranged for receiving said glue from said pre-melting unit (3).

5. Apparatus according to claim 4, wherein said collecting chamber (22) faces a melting chamber (14) of said pre-melting unit (3) arranged for melting said glue.

6. Apparatus according to claim 4, or 5, wherein said collecting chamber (22) comprises a substantially concave bottom surface (70).

7. Apparatus according to any of claims 4 to 6, as claim 4 is appended to claim 2, or 3, wherein said tank means (4) comprises feeding conduit means (25) arranged for exiting said glue from said collecting chamber (22) to said supplying chamber (24).

8. Apparatus according to claim 7, wherein said tank means (4) comprises first shutter means associated with said feeding conduit means (25) and movable between a first operating position and a second operating position respectively for enabling/preventing said glue from flowing from said collecting chamber (22) to said supplying chamber (24).

9. Apparatus according to any one of claims 2 to 8, as claim 4 is appended to claim 2, or 3, wherein said tank means (4) comprises washing conduit means (26) arranged for exiting said glue from said supplying chamber (24).

10. Apparatus according to claim 9, wherein said tank means (4) comprises second shutter means associated with said washing conduit means (26) and movable between a further first operating position and a further second operating position respectively for enabling/preventing said glue exiting said supplying chamber (24).

11. Apparatus according to claim 9, or 10, wherein said feeding conduit means (25) intersects said washing conduit means (26) in an intersecting zone (28) of said tank means (4).

12. Apparatus according to claim 11, wherein said tank means (4) comprises shutter means (27), positioned substantially at said intersecting zone (28), and movable between a first working position (A), in which said shutter means (27) enables said glue to flow along said feeding conduit means (25) from said collecting chamber (22) to said supplying chamber (24), and a second working position (B), in which said shutter means (27) enables said glue to flow from said supplying chamber (24) to an outlet (100) of said washing conduit means (26).

13. Apparatus according to any preceding claim, and comprising opening means (30, 31, 32, 33, 251, 280), associated with said tank means (4), and arranged for enabling said tank means (4) to be washed.

14. Apparatus according to claim 13, wherein said opening means (30, 31, 33, 251, 280) comprises wall means (30, 31, 32) removably associated with said supplying chamber (24).

15. Apparatus according to claim 14, wherein said wall means (30, 31, 32) comprises a first wall (30) and a second wall (31) of said supplying chamber (24).

16. Apparatus according to claim 15, wherein said first wall (30) and said second wall (31) face each other.

17. Apparatus according to any one of claims 14 to 16, wherein said wall means (30, 31, 32) comprises a bottom wall (32) of said supplying chamber (24).

18. Apparatus according to any one of claims 13 to 17, wherein said opening means (30, 31, 33, 251, 280) comprises a washing opening (33) arranged for exiting said glue from said tank means (4).

19. Apparatus according to claim 18, wherein said washing opening (33) is made in said bottom wall (32).

20. Apparatus according to claim 18, or 19, and comprising plug means (34) removably associated with said washing opening (33).

21. Apparatus according to claim 13, as claim 13 is appended to claim 2, or 3, wherein said opening means (30, 31, 33, 251, 280) comprises a discharging chamber (251) arranged for receiving said glue and exiting said glue from said supplying chamber (24).

22. Apparatus according to claim 21, wherein said discharging chamber (251) is defined by diverging walls (401).

23. Apparatus according to claim 21, or 22, wherein said tank means (4) comprises a connecting conduit (260) arranged for connecting said discharging chamber (251) with said supplying chamber (24).

24. Apparatus according to claim 23, wherein said tank means (4) comprises further shutter means (270), associated with said connecting conduit (260), and movable between a further first working position (C), and a further second working position, wherein said further shutter means (270) respectively enables/prevents said glue from flowing along said connecting conduit (260) from said supplying chamber (24) to said discharging chamber (251).

25. Apparatus according to any one of claims 21 to 24, wherein said opening means (30, 31, 33, 251, 280) comprises further wall means (280) removably associated with said discharging chamber (251).

26. Apparatus according to any preceding claim, and comprising rapid hooking/unhooking means (59) for enabling said apparatus (1) to be rapidly hooked/unhooked to/from a working machine.

27. Apparatus according to claim 26, wherein said rapid hooking/unhooking means comprises shank means (59).

28. Apparatus according to any preceding claim, and comprising pneumatic loading means arranged for loading said glue in granular form into said pre-melting unit (3).

29. Apparatus according to any preceding claim, and comprising lifting means (62, 63) arranged for facilitating said apparatus (1) to be lifted.

30. Apparatus according to claim 29, wherein said lifting means comprises handle means (62, 63).
